Europäisches Patentamt

European Patent Office

Office européen des brevets

(19)

(11) Veröffentlichungsnummer: **0 165 602**
**B1**

(12)   **EUROPÄISCHE PATENTSCHRIFT**

(45) Veröffentlichungstag der Patentschrift:
**12.10.88**

(21) Anmeldenummer: **85107594.5**

(22) Anmeldetag: **19.06.85**

(51) Int. Cl.⁴: **A 01 D 57/24**, A 01 D 57/00,
A 01 D 57/30, A 01 D 34/12,
A 01 D 43/08

(54) **Verbindung der Abgabeöffnung einer Erntemaschine mit einer Ablegeeinrichtung.**

(30) Priorität: **20.06.84 US 622364**

(43) Veröffentlichungstag der Anmeldung:
**27.12.85 Patentblatt 85/52**

(45) Bekanntmachung des Hinweises auf die Patenterteilung:
**12.10.88 Patentblatt 88/41**

(84) Benannte Vertragsstaaten:
**BE DE FR GB IT LU NL SE**

(56) Entgegenhaltungen:
**DD-A-24 323**
**DE-B-2 412 461**

(73) Patentinhaber: **DEERE & COMPANY, 1 John Deere Road, Moline Illinois 61265 (US)**

(72) Erfinder: **Stephenson, Roger Dale, RR 3, Bloomfield Iowa 52537 (US)**

(74) Vertreter: **Feldmann, Bernhard, DEERE & COMPANY European Office, Patent Department Steubenstrasse 36- 42 Postfach 503, D-6800 Mannheim 1 (DE)**

EP 0 165 602 B1

## Beschreibung

Die Erfindung bezieht sich auf eine Verbindung der Abgabeöffnung einer sich auf Rädern abstützenden, aus einer Arbeitsstellung in eine höher gelegene Transportstellung verstellbaren Erntemaschine mit einer Ablegeeinrichtung (vgl. US-A-3 797 207).

Bei der bekannten Verbindung (GB-A-2 077 562) ist die Ablegeeinrichtung rückwärtig an einer Erntemaschine angeordnet und kann von der Erntemaschine aufgenommenes Gut seitlich neben dem Rad oder zwischen den Rädern ablegen. Die Ablegeeinrichtung selbst ist als ein verschiebbarer, in seiner Förderrichtung umkehrbarer Förderer ausgebildet und an der Erntemaschine fest angeordnet. Sie dient dem Zweck, sogenannte Doppelschwaden bilden zu können, damit Feldhäcksler oder Ballenpressen mit großer Kapazität voll genutzt werden können. Derart große Feldhäcksler sind aber nicht in allen Einsatzgebieten vorhanden, und Feldhäcksler und Ballenpressen kleiner Größe können nur einen einzelnen Schwad auflegen. In einem solchen Fall hat dann eine derartige Ablegeeinrichtung ihren Sinn verloren. Wenn sie nun fest an der Erntemaschine angebaut ist, wird dann nur unnötig Energie verloren.

Andererseits ist bereits eine Aufsammelmaschine mit austauschbaren Ladegeräten für Heu, Stroh und Grüngut bekannt (DD-A-24 323), deren Fahrgestell als offene Lager ausgebildete Lagerstellen aufweist, in die Lagerzapfen oder Rohre, die jedes Ladegerät aufweist, von oben her eingelegt werden können. Hierzu dient ein karrenartiges Hilfsgerät, über das das Ladegerät so herangefahren wird, daß ein erster Lagerzapfen in eine rückwärtige Lagerstelle eingehängt werden kann. Danach wird das Ladegerät in der rückwärtigen Lagerstelle so weit nach vorne verschwenkt, bis sein zweiter Lagerzapfen in einer frontseitig vorgesehenen Lagerstelle aufgenommen wird. Dieser Vorgang ist sehr aufwendig und beinhaltet einen großen Aufwand von Muskelkraft.

Aus der DE-B-2 412 461 gehen Standbeine hervor, die in der Arbeitsstellung keine Bodenberührung haben.

Die mit der Erfindung zu lösende Aufgabe wird darin gesehen, die Ablegeeinrichtung in einfacher Weise an die Erntemaschine an- und abbauen zu können, und zwar ohne Hilfe von Werkzeug.

Diese Aufgabe ist nach der Erfindung dadurch gelöst worden, daß die Ablegeeinrichtung an ihrer Frontseite Anschlußelemente aufweist, die beim Verstellen der Erntemaschine aus der Arbeitsstellung in die Transportstellung von an der Erntemaschine vorgesehenen Anschlußelementen erfaßt werden und um die die Ablegeeinrichtung nach dem Abheben von der Aufstellfläche auf die Erntemaschine zu verschwenkt, wobei die Anschlußelemente an Erntemaschine und Ablegeeinrichtung derart ausgebildet sind, daß die Ablegeeinrichtung im eingebauten Zustand frei nach oben um die Anschlußelemente schwenkbar ist. Damit ist es lediglich erforderlich, die Ablegeeinrichtung nahe an die Erntemaschine heranzubringen, beispielsweise heranzuziehen, wonach die normale Verstellmöglichkeit der Erntemaschine dazu genutzt wird, daß die Ablegeeinrichtung automatisch erfaßt wird, aufgrund ihres Eigengewichtes in die Arbeitsstellung einschwenkt und dort verbleibt und, sollte sie auf ein Hindernis auftreffen, nicht beschädigt wird.

Damit die Ablegeeinrichtung leicht an die Maschine herangezogen und von der Erntemaschine erfaßt werden kann, wird ferner nach der Erfindung vorgeschlagen, daß die Ablegeeinrichtung im abgebauten Zustand sich auf Standbeinen abstützt, die in der Transportstellung der Erntemaschine derart verstellbar sind, daß sie in der Arbeitsstellung der Erntemaschine keine Bodenberührung haben. Damit kann die Erntemaschine mit angebauter Ablegeeinrichtung wieder leicht aus ihrer Transportstellung in die Arbeitsstellung abgesenkt werden, so daß dann die Standbeine nicht störend wirken. Zweckmäßig können die Standbeine unter die Ablegeeinrichtung klappbar sein.

Das Erfassen der Ablegeeinrichtung wird erfindungsgemäß dadurch erleichtert, daß die an der Erntemaschine vorgesehenen Anschlußelemente als nach oben offene Haken ausgebildet sind, an die sich bodenwärts erstreckende Streben anschließen, gegen die die Ablegeeinrichtung frontseitig zur Anlage kommt. Dabei ist es vollkommen ausreichend, wenn an jeder Seite ein Haken vorgesehen ist.

Da die Ablegeeinrichtung im Einsatz unter Umständen nach hinten ausladend sein kann und keine all zu große Bodenfreiheit hat, wird ferner nach der Erfindung vorgeschlagen, daß die Anschlußelemente an der Erntemaschine und Ablegeeinrichtung derart ausgebildet sind, daß die Ablegeeinrichtung im angebauten Zustand frei nach oben um die Anschlußelemente schwenkbar ist, damit sie, sollte sie auf ein Hindernis auftreffen, nicht beschädigt wird.

In der Zeichnung ist ein nachfolgend näher erläutertes Ausführungsbeispiel der Erfindung dargestellt. Es zeigt:

Fig. 1 eine an eine gezogene Erntemaschine angeschlossene Schwadablegeeinrichtung in zwei Stellungen, in der einmal ein einzelner Schwad und zum anderen ein Doppelschwad abgelegt werden kann;

Fig. 2a die hinter der Erntemaschine auf den Boden abgestellte Schwadablegeeinrichtung mit sich in Arbeitsstellung befindlicher Erntemaschine;

Fig. 2b die an die Erntemaschine angeschlossene Schwadablegeeinrichtung mit sich in Transportstellung befindlicher Erntemaschine;

Fig. 3 Erntemaschine mit auf dem Boden abgestellter Schwadablegeeinrichtung in

perspektivischer Darstellung;

Fig. 4 die an die Erntemaschine angebaute Schwadablegeeinrichtung in Arbeitsstellung;

Fig. 5 die Schwadablegeeinrichtung in Blickrichtung der Schnittlinie 5-5 in Fig. 4;

Fig. 6 ein Schnitt nach der Linie 6-6 in Fig. 5;

Fig. 7 ein Schnitt nach der Linie 7-7 in Fig. 5;

Fig. 8 ein Schnitt nach der Linie 8-8 in Fig. 7;

Fig. 9 den elektrohydraulischen Steuerkreis für die Betätigung der Schwadablegeeinrichtung;

Fig. 10 einen Schnitt nach der Linie 10-10 in Fig. 4

und die Fig. 11 und 12 ein weiteres Verfahren, wie die Schwadablegeeinrichtung zum Legen eines Einfach- bzw. Doppelschwades eingesetzt werden kann.

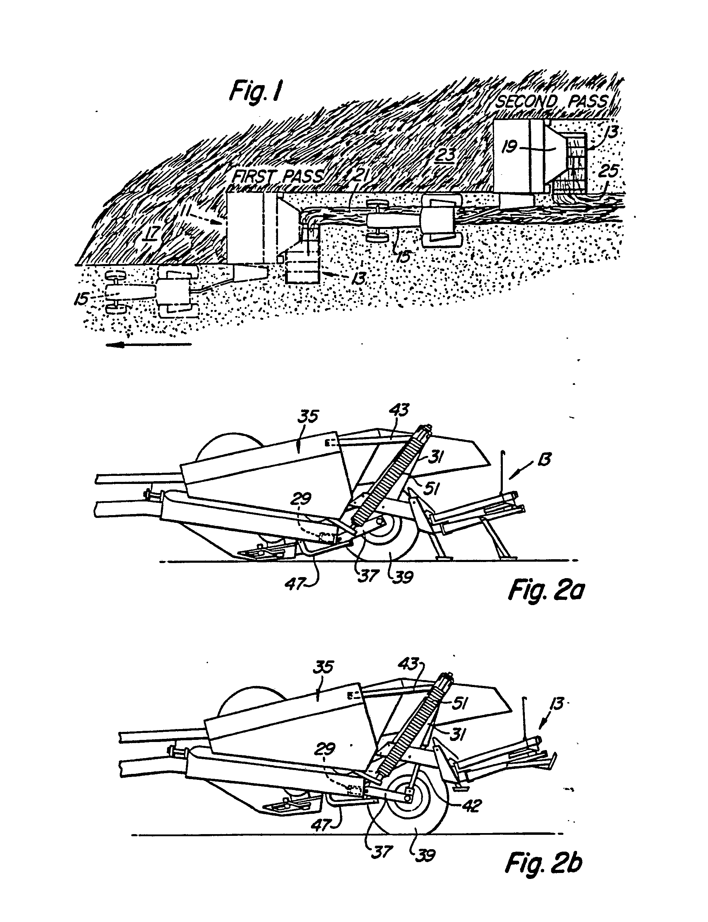

In der nachfolgenden Beschreibung beziehen sich Begriffe wie vorwärts, rückwärts, vertikal, horizontal, seitlich auf die Erntemaschine in ihrer normalen Arbeitsposition und mit Bezug auf die Fahrtrichtung nach vorne und die Ausdrücke links und rechts auf eine hinter der Maschine stehende und in Fahrtrichtung schauende Person. Fig. 1 der Zeichnung zeigt eine an eine Erntemaschine 11 angeschlossene Schwadablegeeinrichtung 13 bei zwei aufeinanderfolgenden Arbeitsgängen, bei dem einmal ein einzelner Schwad 21 und nachfolgend ein weiterer Schwad 25 zu dem einzelnen Schwad 21 abgelegt wird, um einen Doppelschwad zu formen. Wie ferner aus Fig. 1 der Zeichnung hervorgeht, handelt es sich bei der Erntemaschine 11 um ein gezogenes Gerät, doch wird an dieser Stelle darauf verwiesen, daß die Schwadablegeeinrichtung auch an selbstfahrenden Maschinen Verwendung finden kann. Die Erntemaschine 11 im Ausführungsbeispiel ist als Mähschlagzetter ausgebildet, wie er beispielsweise in der US-A-3 797 207 dargestellt ist. Derartige Erntemaschinen schneiden zunächst das Gut, dann bereiten sie es auf durch Quetschen und legen anschließend das aufbereitete Gut in einem Schwad ab. An derartige Maschinen aber auch an andere kann die Schwadablegeeinrichtung nach der Erfindung angeschlossen werden. Zum Schwadablegen wird mit dem aus Ackerschlepper und gezogener Erntemaschine bestehenden Gespann in einer ganz bestimmten Art und Weise über das abzuerntende Feld gefahren, und zwar derart, daß der Ackerschlepper nie über nicht abgemähtes Gut fährt und die Erntemaschine nach Möglichkeit immer im Einsatz ist. Aus Fig. 1 geht nun hervor, daß der Ackerschlepper 15 zunächst über einen Streifen abgeernteten Bodens bzw. auf einem Feldweg fährt, wobei die Erntemaschine 11 gegenüber dem Ackerschlepper 15 versetzt ist, um einen ersten Streifen 17 abzuernten. Das Erntegut wird, wenn es aus der Erntemaschine 11 austritt, auf die Schwadablegeeinrichtung 13 gelangen und teilweise direkt auf den Boden, um einen ersten Schwad 21 zwischen den Rädern allerdings zur rechten Seite hin zu bilden. Dabei ist die Ablegeposition der Schwadablegeeinrichtung 13 derart gewählt, daß der Schwad 21 eine Lage erhält, in der noch genügend Platz für den Ackerschlepper für die zweite Bahn bleibt, in der der Schwad zwischen den Rädern des Ackerschleppers zu liegen kommt, ohne daß der Ackerschlepper über nicht abgeerntetes Gut fahren müßte. Während der zweiten Bahn befindet sich die Erntemaschine rechts neben dem Ackerschlepper, um einen zweiten Streifen 23 abernten zu können. Dabei ist die Schwadablegeeinrichtung 13 derart in eine zweite Ablegeposition verstellt worden, daß das aus dem Streifen 23 abgeerntete Gut voll auf die Schwadablegeeinrichtung 13 auftrifft und dann nach links in einen Schwad 25 abgelegt wird, der sich links außerhalb der Maschine befindet und an den Schwad 21 anschließt bzw. diesen teilweise überlappt. Dadurch wird ein Doppelschwad gebildet.

Hierbei kann die zweite Schwadablegestellung und die Lage des zweiten Schwades 25 nach den Wünschen der Bedienungsperson variiert werden. So kann der Schwad 25 voll auf den Schwad 21 zur Auflage kommen, unmittelbar neben ihm liegen, oder von dem Schwad 21 einen Abstand aufweisen. Die maximale Breite eines Schwades wird durch die Aufnahmevorrichtung eines nachfolgend zum Einsatz kommenden Erntegerätes, beispielsweise eines Feldhäckslers oder einer Ballenpresse bestimmt, die den Schwad vom Feld aufnimmt. So kann es unter Umständen zweckmäßig sein, daß ein Teil des Schwades 25 sich auch innerhalb der äußeren Begrenzung der Erntemaschine 11 befindet.

Aus den Fig. 2 bis 5 gehen in größerem Detail die Basis Komponenten der Schwadablegeeinrichtung 13 zusammen mit den zusammenwirkenden Komponenten der Erntemaschine 11 hervor. Die Erntemaschine 11 besteht im einzelnen aus einem Hauptrahmen 27 mit einem Querteil 29 und zwei zueinander Abstand aufweisenden Hochteilen 31 und 33, die sich von dem Querteil 29 aus nach oben erstrecken. Ein Erntekopf 35 ist an dem Hauptrahmen 27 angeschlossen und erstreckt sich von dem Querteil 29 aus gesehen nach vorne.

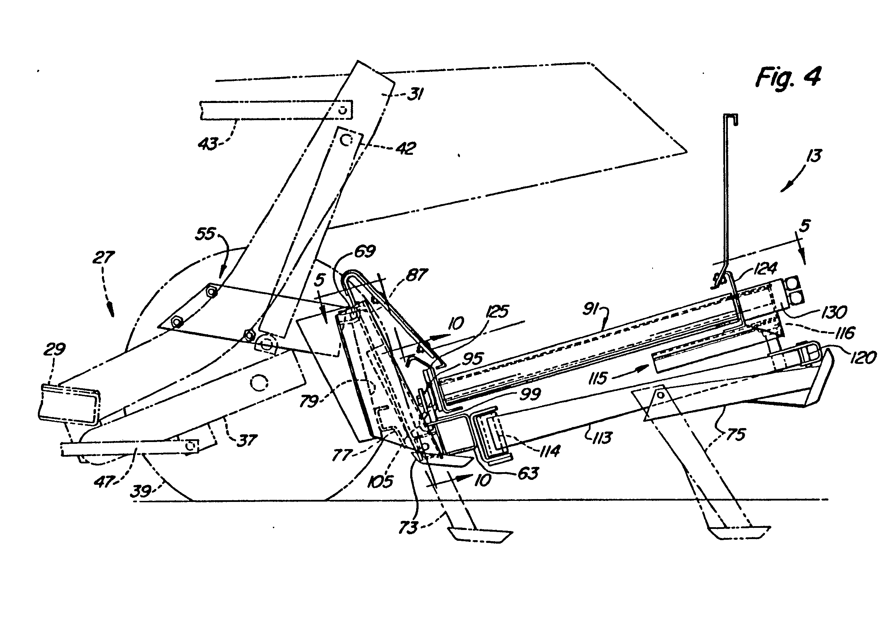

Wie bereits ausgeführt wurde ist die Erntemaschine in ihren Einzelheiten in der US-A-3 797 207 dargestellt. Hier wird deshalb nur kurz auf die wichtigsten Einzelteile eingegangen. Zwei zueinander Querabstand aufweisende Radträger 37, von denen lediglich ein einziger in der Zeichnung dargestellt ist, sind mit dem Querteil 29 derart verbunden, daß sie vertikal schwenkbar sind. Sie nehmen ferner Laufräder 39 und 41 auf, die an ihnen drehbar angeordnet sind. Zwei hydraulisch beaufschlagbare Zylinder 42, von denen lediglich einer in Fig. 4 dargestellt ist, wirken zwischen den Hochteilen 31 und 33 und den Radträgern 37, um diese vertikal zu verschwenken, wodurch der Querteil 27 und damit die gesamte Erntemaschine 11 realtiv zu dem Boden zwischen einer Arbeitsposition und einer Transportstellung verschwenkt werden kann. Der Erntekopf 35 erstreckt sich längsweise über und vor dem Querteil 29 zwischen den Hochteilen 31 und 33. Obere Lenker 43, von denen in der Zeichnung nur einer dargestellt ist, und untere Lenker 47, von denen ebenfalls nur einer dargestellt ist, schließen den Erntekopf 35 an den Hauptrahmen 27 an. Im einzelnen erstrecken sich die oberen Lenker 43 zwischen dem Erntekopf 35 und den oberen Enden der Hochteile 31 und 33. Die unteren Lenker 47 wiederum sind zwischen dem Erntekopf 35 und den Radträgern 37 vorgesehen. Federn 51 und 53 sind zwischen den oberen Enden der Hochteile 31 und 33 und dem Erntekopf 35 angeordnet und bewirken, daß der Erntekopf mit Bezug auf den Querteil 29 relativ nach oben gezogen wird.

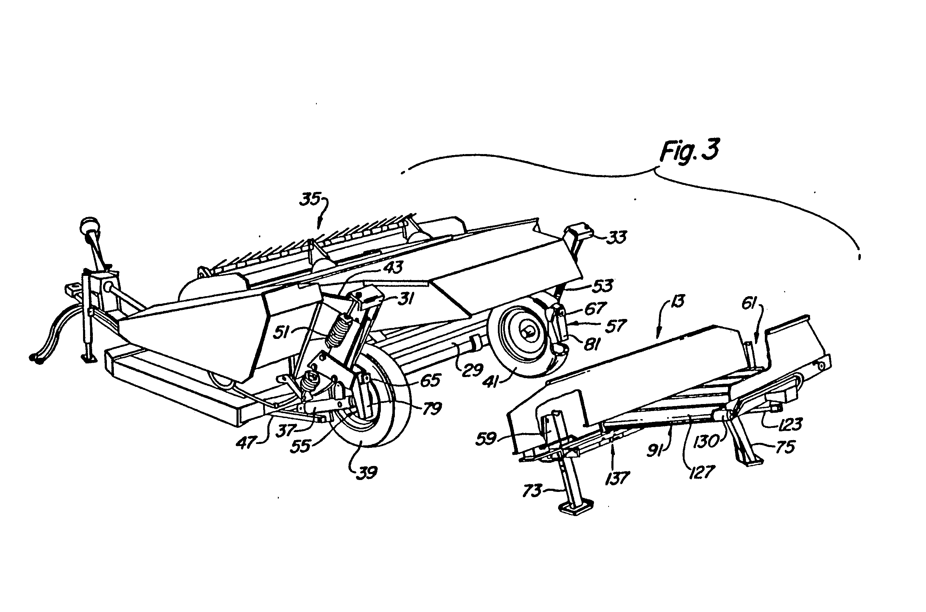

Aus Fig. 4 ist die an die Erntemaschine 11 angebaute Schwadablegeeinrichtung 13 zu erkennen, in der sich die Schwadablegeeinrichtung in ihrer Arbeitsposition befindet und in der sie keine Bodenberührung hat, d.h. sie wird vollkommen von der Erntemaschine getragen, und zwar an deren Rückseite, in der sie sich von dem Querteil 29 nach hinten erstreckt. Die Schwadablegeeinrichtung 13 selbst ist an der Erntemaschine 11 über erste und zweite Ausleger 55 und 57 angeordnet, die ihrerseits an dem Hauptrahmen 27 befestigt sind, und über erste und zweite zueinander Abstand aufweisende Ausleger 59 und 61, die fest an dem Hauptrahmen der Schwadablegeeinrichtung 13 angebracht sind, wobei der Hauptrahmen durch einen querverlaufenden Rahmen 63 gebildet ist. Die Ausleger 55 und 57 weisen sich nach oben öffnende, v-förmig ausgebildete Haken 65 und 67 auf, in die entsprechende Querbolzen 69 und 71 an den Auslegern 59 und 61 der Schwadablegeeinrichtung 13 eingreifen können. Diese Anschlußelemente in Form der Querbolzen 69 und 71 weisen einen vertikalen Abstand zu dem Rahmen 63 auf, befinden sich in Fahrtrichtung gesehen vor dem Schwerpunkt der Schwadablegeeinrichtung 13 und bilden eine Schwenkachse, um die die Schwadablegeeinrichtung mit Bezug auf die Erntemaschine 11 schwenken kann. Zum Anschließen der Schwadablegeeinrichtung 13 an die Erntemaschine 11 wird die Schwadablegeeinrichtung, wie es aus Fig. 2 hervorgeht, nahe an die Erntemaschine 11 herangebracht. Dies kann in einfacher Weise dadurch getan werden, daß die Erntemaschine rückwärts gefahren wird, bis sie sich im wesentlichen vor der Schwadablegeeinrichtung 13 befindet. In dieser Stellung stützt sich die Schwadablegeeinrichtung 13 noch auf drei Standbeinen 73 und 75 ab, die mit Ausnahme des dritten in den Fig. 3 und 4 zu sehen sind. In diesem Zustand kann dann die Ablageeinrichtung derart auf dem Boden verrutscht werden, daß die Haken 65 und 67 unter die Anschlußelemente 69 und 71 an der Schwadablegeeinrichtung 13 zu liegen kommen. Der Anbau der Schwadablegeeinrichtung 13 an die Erntemaschine 11 erfolgt dann in einfacher Weise dadurch, daß der Hauptrahmen 27 zusammen mit den daran angeschlossenen Erntekopf 35 aus einer unteren Arbeitsposition, die schematisch in Fig. 2 dargestellt ist und in der das Gut abgeerntet wird, in eine höher gelegene Transportposition verstellt wird, die aus der Fig. 2b zu ersehen ist. Wenn nun der Hauptrahmen 27 von der Arbeitsposition in die Transportposition verstellt wird, dann werden die Anschlußelemente 69 und 71 in den zugehörigen Haken 65 und 67 aufgenommen, und sobald die Schwadablegeeinrichtung von dem Boden ababgehoben wird, schwenkt sie um die Querbolzen 69 und 71, bis sie gegen die Erntemaschine 11 zur Anlage kommt. Im einzelnen schwenkt bei dieser Ausführung die Schwadablegeeinrichtung 13, bis Queranschläge 77 (von denen nur einer gezeigt ist) an den Auslegen 59 und 61 gegen die rückwärtigen Oberflächen 79 und 81 der Ausleger 55 und 57 an der Erntemaschine 11 zur Anlage kommen. Nachdem die Erntemaschine in ihre Transportstellung verstellt wurde, müssen die Standbeine 73 und 75 noch aus ihrer ausgefahrenen Stützposition in eine Arbeitsposition unterhalb der Schwadablegeeinrichtung verschwenkt werden. Um zu gewährleisten, daß die Anschlußelemente 69 und 71 in den Haken 65 und 67 verbleiben, sind Sperrstifte 87 und 89 vorgesehen, die quer zu den Anschlußelementen 69 und 71 in die oberen Teile der Ausleger 55 und 57 eingesetzt werden.

Der Abbau der Schwadablegeeinrichtung 13 von der Erntemaschine 11 kann in einfacher Weise dadurch ausgeführt werden, daß die einzelnen Schritte einfach umgekehrt werden. Hierzu ist es erforderlich, die Sperrstifte 87 und 89 zu entfernen, die Standbeine 73 und 75 wieder in ihre nach unten gerichtete Position zu verbringen und dort zu arretieren und danach die Erntemaschine aus ihrer Transportstellung in ihre Arbeitsstellung abzusenken. Wenn nun die Erntemaschine in die Arbeitsstellung abgesenkt wird, dann treten die Anschlußelemente 69 und 71 aus den Haken 65 und 67 aus. Befindet sich nun die Erntemaschine 11 in der Arbeitsstellung und ist die Schwadablegeeinrichtung 13 auf dem Erdboden direkt hinter der Erntemaschine abgestellt, so braucht die Schwadablegeeinrichtung nur noch nach rückwärts von der Erntemaschine weggezogen werden, so daß sie vollkommen frei ist. Aus vorstehendem folgt, daß der An- und Abbau der Schwadablegeeinrichtung in einfachster Weise ohne Zuhilfenahme von Werkzeugen erfolgen kann, wozu lediglich die Bedienungsperson erforderlich ist.

Aufgrund dieser erfindungsgemäßen Anordnung werden verschiedene sehr bedeutende Vorteile erreicht. 1. Die Federung und schwimmende Aufhängung des Erntekopfes 35 an dem Hauptrahmen 27 wird durch den An- und Abbau der Schwadablegeeinrichtung 13 nicht beeinträchtigt. 2. Das Gewicht der Schwadablegeeinrichtung 13 balanciert das Gewicht des Erntekopfes 35 an dem Hauptrahmen 27 aus, wodurch die Erntemaschine eine längere Lebensdauer erhält. 3. Die Haken 65 und 67 und die Anschlußelemente 69 und 71 sind oberhalb des durch den Rahmen 23 gebildeten Hauptrahmens und vor der Schwerpunktlage der Schwadablegeeinrichtung 13 angeordnet, wodurch die Schwadablegeeinrichtung 13 frei nach oben wegschwingen kann, sofern sie gegen Hindernisse stoßen sollte oder beim Durchfahren von tieferen Gräben während des Einsatzes von Erntemaschine und Schwadablegeeinrichtung. 4. Die Haken 65 und 67 haben eine v-förmige Konfiguration, die eine größere Toleranz für die Anordnung der Schwadablegeeinrichtung 13 mit Bezug auf die Erntemaschine 11 während des Anbaus ermöglicht. Hierdurch wird der Anbau einfacher gestaltet, da dies der Bedienungsperson es erlaubt, die Erntemaschine 11 zurückzuschieben und/oder die Schwadablegeeinrichtung 13 an ihren Platz zu ziehen, so daß die Anschlußelemente 69 und 71 leicht von den Haken 65 und 67 erfaßt werden können, wenn die Erntemaschine 11 in ihre Transportstellung hochgefahren wird. Infolge der Anordnung der rückwärtigen Flächen 79 und 81 und der Haken 65 und 67 wird die Ablegeeinrichtung richtig positioniert für den Einsatz an der Erntemaschine 11, wenn die Erntemaschine 11 hochgefahren wird, ohne daß eine zusätzliche Einstellung durch die Bedienungsperson erforderlich wäre.

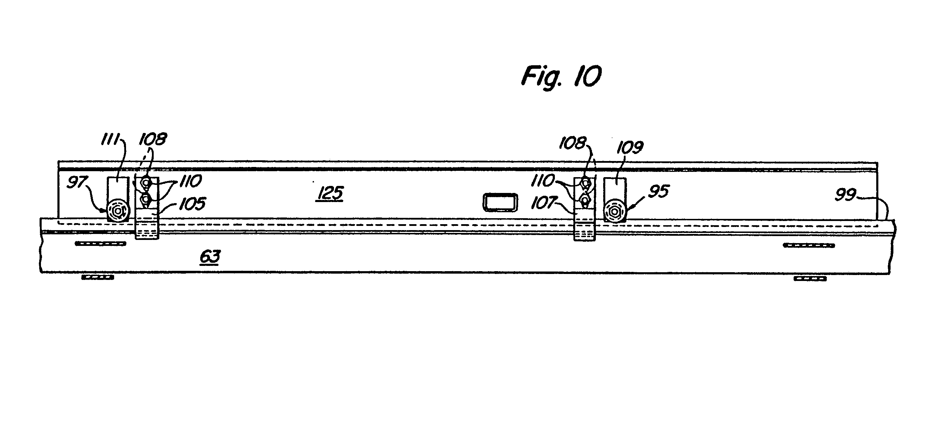

Zur Beschreibung des Förderers der Schwadablegeeinrichtung wird insbesondere auf die Fig. 4 bis 6 und 10 verwiesen. Im einzelnen ist die Schwadablegeeinrichtung 13 mit einem in seiner Förderrichtung umkehrbaren Förderer 91 ausgerüstet, der verschiebbar auf dem Rahmen 63 an vorzugsweise 3 Punkten angeordnet ist. Nach einem bevorzugten Ausführungsbeispiel ist der Förderer 91 über einen Stellmechanismus 93 zwischen zwei Endstellungen an dem Rahmen 63 hin und her verstellbar, wobei die eine Endstellung dazu dient, einen Schwad zwischen den Rädern der Erntemaschine, d.h. innerhalb ihrer äußeren Begrenzung abzulegen. Diese Endstellung wird auch als erste Gutablagestellung bezeichnet. In der zweiten Endstellung kann der Schwad im Bereich einer seitlichen Begrenzung, d.h. im Bereich eines Rades innerhalb oder außerhalb dieses Rades abgelegt werden. Zwei oder mehr, vorzugsweise allerdings zwei Stützpunkte sind an einer Seite des Förderers 91 und lediglich ein Stützpunkt ist an der gegenüberliegenden Seite des Förderers 91 vorgesehen. Die beiden auf einer Seite des Förderers 91 im Bereich des Rahmens 63 liegenden Stützpunkte werden durch zwei Gleitfüße 95 und 97 bzw. Rollen gebildet, die auf einer Führung 99 verstellbar sind, wobei sich die Führung längs des Rahmens 63 erstreckt. In dem bevorzugten Ausführungsbeispiel sind die Rollen 95 und 97 identisch ausgebildet und mit zwei Paar Abstand zueinander aufweisenden Flanschscheiben 101, 103 und 102, 104 versehen, durch die die Rollen auf der Führung 99 gehalten werden. Zusätzlich sind einstellbare Niederhalter 105, 107 noch vorgesehen, die dazu dienen, die Rollen 95 und 97 auf der Führung 99 weiter zu halten. Aus Fig. 10 ist zu ersehen, daß die Niederhalter 105 und 107 in Folge von mehreren in ihnen vorgesehenen Schlitzen 108 verstellbar sind, durch die sich wiederum Schrauben 110 erstrecken, die mit dem Förderer verbindbar sind. Um zu verhindern, daß sich im Bereich der Rollen 95 und 97 ein Gutsstau bildet sind, die Rollen 95 und 97 an Platten 109 und 111 angeordnet, die sich unterhalb der entsprechenden Flanschscheiben einer jeden Rolle erstrecken. Die Platten 109 und 111 dienen dazu, das Gut von der Führung 99 fortzudrücken, bevor Gut oder anderes Material sich zwischen der Führung 99 und den Rollen 95 und 97 aufstauen könnte. Selbstverständlich kann die Funktion der Platten 109 und 111 auch durch eine Platte oder ein anderes Teil, das unabhängig von dem Träger der Rollen 95 und 97 ist, erfolgen.

Der dritte Stützpunkt, der der einzige für die gegenüberliegende Seite des Förderers ist, wird durch einen sich zu seinem rückwärtigen Ende hin verjüngenden Arm 113 gebildet, der an einem Ende mit dem Rahmen 63 über ein Gelenk 114 verbunden ist und dessen anderes Ende in einer Schiene 115 verschiebbar aufgenommen ist, die mit der Bodenoberfläche des Förderers 91 in Verbindung steht. Die sich verjüngende Ausführung des Armes 113 vermindert das Gewicht und ermöglicht eine größere Flexibilität, wodurch Stoßbelastungen am Hauptrahmen 27 der Erntemaschine 11 verhindert werden.

Auch die Lagerung des Förderers in nur drei Punkten ergibt zahlreiche Vorteile. Zunächst hat der stellmechanismus 93 eine geringere Tendenz zu klemmen, und zwar im Vergleich zu herkömmlichen Vorrichtungen. Dann ist die Herstellung des Förderers 91 einfacher, da ein Verziehen des Förderers 91 weniger kritisch ist. Drittens benötigen die auf der Führung 99 laufenden Rollen 95 und 97 weniger Schmierstoff als herkömmliche Laufschienen, die einen Metall zu Metall Kontakt haben. Schließlich ist die Kraft, die benötigt wird, um den Förderer hin un her zu verstellen, gering, wodurch es wiederum ermöglicht wird, den Rahmen des Förderers und den Stellmechanismus 93 leichter auszugestalten.

Der vorstehend beschriebene Arm 113 dient nicht nur dazu, den Förderer zu tragen, sondern er bildet auch eine Komponente des Stellmechanismus 93, um den Förderer 91 seitlich zwischen seinen beiden Endstellungen hin und her zu schieben. Hierzu wird die Kraft auf den Förderer 91 durch ein abgedichtetes Lager 116 übertragen, das an dem rückwärtigen Ende des Armes 113 vorgesehen ist. Das Lager 116 läuft in der Schiene 115 und wird durch die Schwenkbewegung des Armes 113 um das Gelenk 114 auf einem Kreisbogen bewegt, der wiederum bewirkt, daß sich der Förderer 91 seitlich in einer geraden Linie verschiebt.

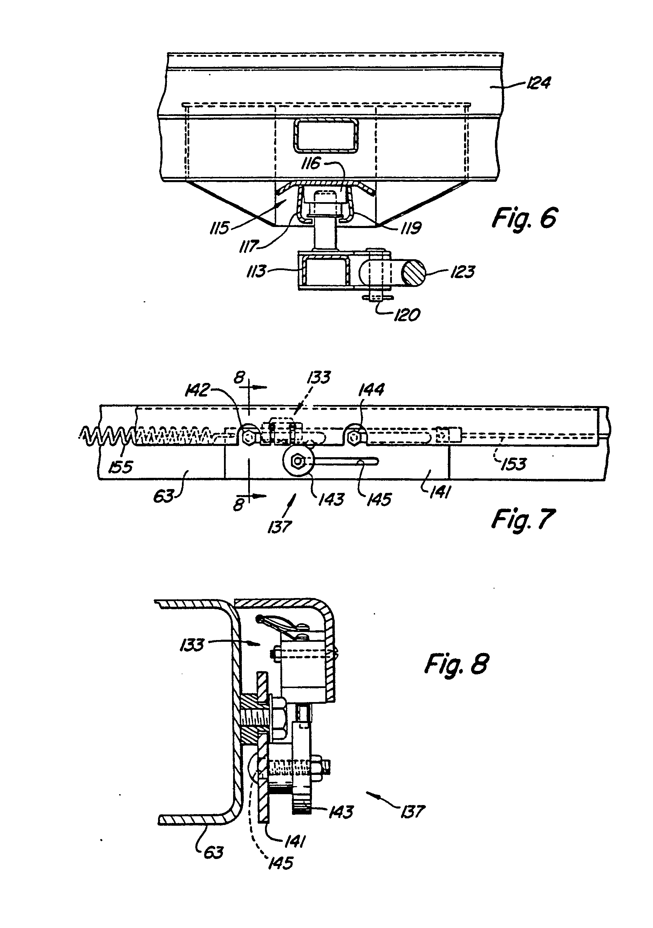

Schiene 115 und Lager 116 sind derart ausgebildet, daß sie sich frei mit Bezug zueinander während der Schiebebewegung des Förderers 91 bewegen können. Dies wird auf zwei Wegen bewerkstelligt. Erstens ist die Schiene 115 mit Seitenwänden 117 und 119, die in Fig. 6 zu erkennen sind, versehen, die von der unteren Oberfläche des Förderers 91 nach außen divergieren. Zweitens ist der Arm 113 mit einer geringen torsionalen Festigkeit versehen, wodurch das Lager 116 in der Schiene 115 leicht kippen kann, wenn sich der Förderer 51 bewegt. Die Kippbewegung des Lagers 116 erlaubt es dem Lager in einer oberen Kante zu laufen, anstatt daß seine obere Oberfläche in der Schiene 115 schleift. Hierdurch werden die Reibungskräfte zwischen der Schiene 115 und dem Lager 116 reduziert, wodurch gleichfalls der Bedarf an Schmiermittel verringert wird. Im einzelnen wird der Stellmechanismus 93 für den Förderer, der aus dem Arm 113 und der Schiene 115 gebildet wird über einen hydraulisch beaufschlagbaren Zylinder 121 betätigt, über den der Arm 113 um sein Gelenk 114 hin und her geschwenkt werden kann. Der hydraulisch beaufschlagbare Zylinder 121 ist an seinem einen Ende an den Rahmen 63 über ein Gelenk 122 angeschlossen und greift mit seinem anderen Ende an den Arm 113 über ein Gelenk 120 an. Durch Ausfahren einer Zylinderstange 123 des Zylinders 121 wird der Förderer nach rechts verstellt, während durch Einfahren der Zylinderstange 123 der Förderer nach links verschoben wird.

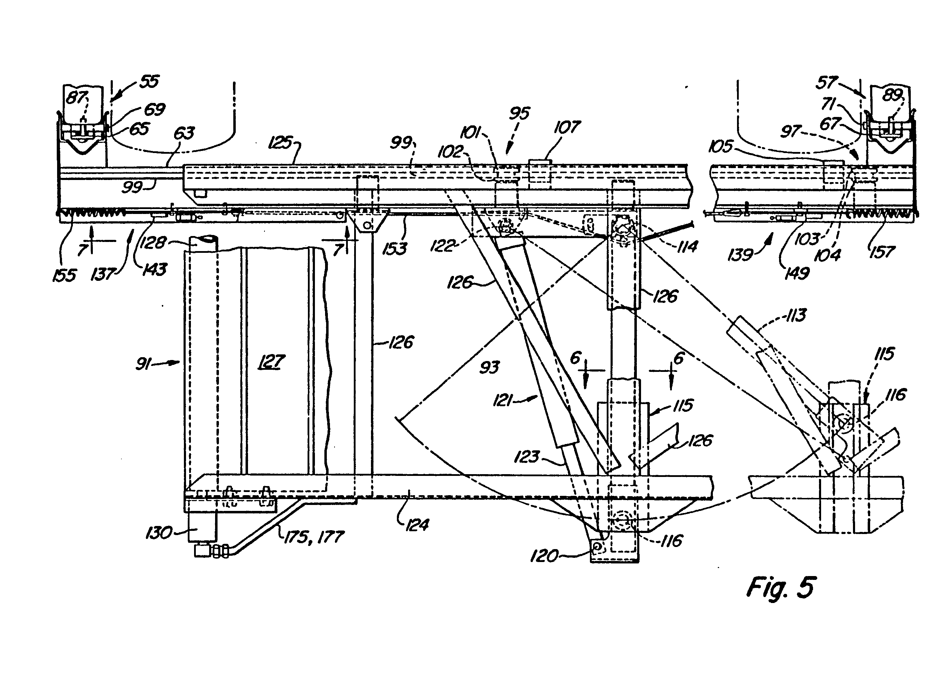

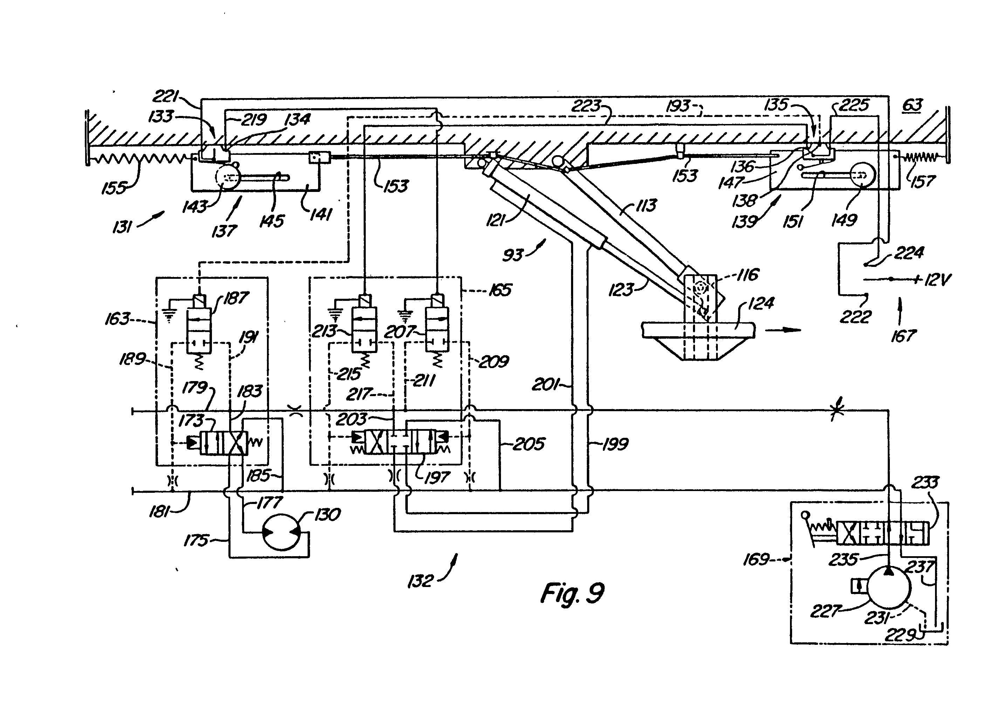

Aus den Fig. 4 und 5 ist zu entnehmen, daß der Förderer 91 zwei Abstand zueinander aufweisende Seiten 124 und 125 beinhaltet, die durch mehrere Träger 126 miteinander verbunden sind. Eine Plane 127 ist drehbar zwischen zwei Rollen vorgesehen, wobei die treibende Rolle mit 128 bezeichnet ist. Die getriebene Rolle ist aus den Zeichnungen nicht erkennbar. Die treibende Rolle 128 wird durch einen herkömmlichen hydraulisch beaufschlagbaren Motor, der in den Fig. 9 und 5, zu erkennen ist, angetrieben.

Der Stellmechanismus 93 wird über einen elektrohydraulischen Steuerkreis beaufschlagt, der im einzelnen in Fig. 9 der Zeichnung dargestellt und mit 132 bezeichnet ist, zum Antreiben und Verstellen des Förderers 91 dient und eine einstellbare Steuerung 131 aufweist, die in den Fig. 5 und 7 bis 9 dargestellt ist. Zu dem Steuerkreis 132 gehört der Zylinder 121 zur Betätigung des Stellmechanismus 93 und der Motor 130 zur Umkehrung der Drehrichtung des Förderers 91. Die Steuerung 131 ist einstellbar und dient dazu, die seitliche Schiebebewegung des Förderers hin und her zwischen der ersten und zweiten Endstellung zu begrenzen. Die Einstellung der Ablegepositionen bzw. der Endstellungen macht es möglich, daß ein doppelter Schwad entweder nebeneinander oder aufeinander abgelegt werden kann. Zu der Steuerung 131 gehören ein erster und ein zweiter Betätiger 137 und 139 über die ein erster Schalter 133 und ein zweiter Schalter 135 betätigt werden können. Über den ersten Schalter wird der Stellmechanismus 93 deaktiviert, wenn der Förderer seine linksseitige Ablagestellung erreicht, wohingegen über den zweiten Schalter 135 der Stellmechanismus 93 deaktiviert wird, wenn der Förderer 91 seine zweite oder rechts gelegene Ablageposition erreicht. Außerdem ist im Bereich des Schalters 135 noch ein Schalter 138 vorgesehen, der dazu dient, die Drehrichtung des Motors 130 zu steuern. Die Schalter 133 und 135 sind normalerweise geschlossene Mikroschalter. Im einzelnen ist der Schalter 133 mit einem normalerweise geschlossenen Kontaktfinger 134 versehen, der elektrohydraulisch mit dem Zylinder 121 in Verbindung steht. Auch der Schalter 135 weist einen normalerweise geschlossenen Kontaktfinger 136 auf, der ebenfalls elektrohydraulisch mit dem Zylinder 121 verbunden ist. Der Kontaktfinger des Schalters 138 ist normalerweise offen und elektrohydraulisch mit dem Motor 130 verbunden. Die Kontaktfinger der Schalter 135 und 138 können auch in einem einzigen Schalter vereinigt sein, sie sollten nur hintereinander betätigt werden, und zwar in einem öffnenden oder schließenden Sinne. Der in den Fig. 7 und 8 dargestellte Betätiger 137 weist erstens einen Träger 141 auf, der längs auf dem Rahmen 63 über eine Schraubenvorrichtung 142, 144 verschiebbar ist, die mit dem Rahmen 63 verbunden ist, und zweitens einen Knopf 143, der einstellbar in einem Langloch 145 in dem Träger 141 festgesetzt werden kann. In gleicher Weise weist der Betätiger 139 einen Träger 147 auf, der verschiebbar an dem Rahmen 63 angeschlossen ist, sowie einen Knopf 149, der einstellbar in einem Langloch 151 des Trägers 147 festgesetzt werden kann. Die Betätiger 137 und 139 sind mit dem Arm verbunden und über diesen über eine Verbindung 153 in Form von Kabeln verschiebbar, wobei noch Federn 155 und 157 vorgesehen sind, über die die Träger 141 und 147 nach außen von dem Arm fortgezogen werden. Die Federn können auch als andere Zugmittel ausgebildet werden. Im bevorzugten Ausführungsbeispiel sind die Federn 155 und 157 zwischen dem Träger 141 und dem Rahmen 63 und dem Träger 147 und dem Rahmen 63 vorgesehen.

Die einstellbare Steuerung ist derart angeordnet, daß sie eine leichte Zugänglichkeit für die Bedienungsperson zum Einstellen der Gutablagepositionen des Förderers gewährleistet. Zusätzlich ist das Kabel 153 nicht all zu teuer in der Herstellung und nicht sehr störanfällig, wenn es mit Fremdgegenständen während des Einsatzes in Berührung kommt. Zusätzlich kann es leicht eingestellt werden, wenn das Gelenk 114 des Armes 115 versetzt werden müßte bei einem Einsatz an einer Schwadablegeeinrichtung 13 an Erntemaschinen die eine andere Breite haben.

Der Steuerkreis 132 ist ferner mit einer Ventileinheit 163 zum Steuern des in zwei verschiedenen Drehrichtungen umlaufenden Motors 130 versehen und mit einer Ventileinheit 165 zum Betätigen des hydraulisch beaufschlagbaren Zylinders 121 sowie mit einem Schalter 167 für die Bedienungsperson, über den der Stellmechanismus 93 zum Verstellen des Förderers 91 in seitlicher Richtung zwischen seinen zwei Endstellungen betätigt werden kann. Der Steuerkreis 132 ist ferner noch mit einer Hydraulikversorgung 169 versehen, über die unter Druck stehende hydraulische Flüssigkeit zu dem Zylinder 121 und dem Motor 130 gelangen kann. Wie ferner aus Fig. 9 hervorgeht, so ist die Steuereinheit 163 mit einem Pilotventil 173 ausgerüstet, das über Leitungen 175 und 177 mit dem Motor 130 und über Leitungen 183 und 185 mit Leitungen 179 und 181 verbunden ist, die zu der Hydraulikversorgung 169 führen. Zu der Ventileinheit 163 gehört ferner noch ein magnetgesteuertes Ventil 187, das mit dem Pilotventil 173 über eine Leitung 189 und mit der Leitung 179 über eine Leitung 191 in Verbindung steht. Das magnetgesteuerte Ventil 187 ist mit dem normalerweise offenen Schalter 138 über eine Leitung 193 verbunden. Über eine Rückführfeder an dem Pilotventil 173, die dem Pilotdruck entgegen wirkt wird das Ventil in eine Stellung verschoben, in der Flüssigekeit, die unter Druck steht, zu dem Motor 130 gelangen kann, um den Förderer 91 entgegen dem Uhrzeigerdrehsinn anzutreiben bzw. nach links, d.h. in einer Richtung die erforderlich ist, um die zweite Bahn der Maschine 11, wie sie in Fig. 1 dargestellt ist, durchfahren zu können. Sobald nun der Magnet des magnetgesteuerten Ventils 187 erregt wird, wird das Ventil 173 derart verschoben, daß die Drehrichtung des Motors 130 umgekehrt wird, das heißt, daß der Motor im Uhrzeigerdrehsinn umläuft in einer Richtung, um den Förderer nach rechts zu drehen und zwar in einer Richtung die erforderlich ist, daß die Erntemaschine 11 die erste in Fig. 1 dargestellte Bahn durchfahren kann.

Die Ventileinheit 165 für den Zylinder 121 ist mit einem Pilotventil 197 versehen, das mit dem Zylinder 121 über Leitungen 199, 201 und mit den Leitungen 179, 181 über Leitungen 203 und 205 verbunden ist. Das Pilotventil 179 wird über an seinen Seiten vorgesehene Federn in seiner Neutralstellung gehalten, in der der Zufluß zum und Abfluß aus dem hydraulischen Zylinder 121 unterbunden ist. Das Pilotventil 179 kann aus seiner Neutralstellung in zwei weitere Stellungen verschoben werden, und zwar in eine Stellung, in der die Zylinderstange 123 des Zylinders 121 ausgefahren wird, und in eine Stellung, in der die Zylinderstange 123 des Zylinders 121 eingefahren wird. Zum Ausfahren des Zylinders 121 ist ein magnetgesteuertes Ventil 207 vorgesehen, das mit dem Pilotventil 197 über eine Leitung 209 in Verbindung steht. Das magnetgesteuerte Ventil 207 ist ferner mit der Leitung 179 über eine Leitung 211 in Verbindung. Um den Zylinder 121 einzufahren, ist ein weiteres magnetgesteuertes Ventil 213 vorgesehen, das über eine Leitung 215 mit dem Pilotventil 197 und mit der Leitung 179 über eine Leitung 217 in Verbindung steht.

Der Magnet des magnetgesteuerten Ventils 207 ist in Reihe zu dem linken Schalter 133 über eine Leitung 219 und mit dem Schalter 167 über eine Leitung 221 verbunden. Der Schalter 167 ist mit einer Stromquelle, wie einer Batterie, verbunden und weist zwei Klemmen 222 und 224 auf, wobei die Verstellung des Schalters 167 zu dem Kontakt 222 hin den Stromkreis zu dem Magnet des magnetgesteuerten Ventils 207 hin schließt, wodurch der Zylinder 121 ausgefahren und der Förderer 91 nach rechts für die zweite Bahn, wie sie in Fig. 1 dargestellt ist, verschoben wird. Durch Verstellen des Schalters 167 zu der Klemme 224 hin wird der Stromkreis zu dem Magneten des magnetgesteuerten Ventils 213 geschlossen, wodurch der Zylinder 121 eingefahren und der Förderer 91 nach links in eine Gutablageposition für die erste Bahn des Förderers verschoben wird, wie sie in Fig. 1 dargestellt wird. Das magnetgesteuerte Ventil 213 ist in Reihe zu dem normalerweise geschlossenen Kontaktfinger 136 des Schalters 135 über eine Leitung 223 und zu dem Schalter 167 über eine Leitung 225 geschaltet.

Die in Fig. 9 dargestellte Hydraulikversorgung 169 ist vorzugsweise eine Hydraulikversorgung am ziehenden Ackerschlepper und auch dort angeordnet. Andererseits ist es allerdings auch möglich, eine unabhängige Hydraulikversorgung vorzusehen. So kann beispielsweise die Hydraulikversorgung 169 an der Schwadablegeeinrichtung 13 oder an der Erntemaschine 11 vorgesehen sein und über einen Antrieb an der Erntemaschine 11 angetrieben werden. Die Hydraulikversorgung 169 besteht im einzelnen aus einer Pumpe 227 mit variabler Fördermenge und konstantem Druck und einem Sammelbehälter 229, der mit der Pumpe 227 über eine Leitung 231 in Verbindung steht. Der Zufluß der Flüssigkeit von der Pumpe 231 kann über ein von Hand steuerbares Ventil 233 kontrolliert werden, das seinerseits wiederum an die Leitungen 179 und 181 angeschlossen ist, die wiederum mit der Ventileinheit 165 und der Ventileinheit 163 in Verbindung stehen, wie vorstehend ausgeführt wurde. Das Ventil 233 ist mit der Pumpe 227 über eine Leitung 235 und mit dem Sammelbehälter 229 über eine Leitung 237 verbunden. Der elektrohydraulische Steuerkreis 132 wird wie folgt betätigt. In den in Fig. 9 dargestellten verschiedenen Positionen der Ventile wird bereits der Motor 130 mit Druckflüssigkeit beaufschlagt und in einer bestimmten Drehrichtung, d.h. entgegen dem Uhrzeigerdrehsinn angetrieben. Ist der Antrieb des Motors beispielsweise bei nicht eingesetzter Erntemaschine nicht erforderlich, so muß lediglich das Ventil 233 in seine Neutralstellung verschoben werden, in der der Zufluß unterbrochen ist. Im übrigen befindet sich in der in Fig. 9 dargestellten Position der Förderer 91 in einer seiner Endstellungen, in der der Zufluß von Druckflüssigkeit zu dem hydraulisch beaufschlagbaren Zylinder 121 unterbrochen ist. Um die erste Bahn zu durchfahren, muß der Förderer 91 nach links verschoben werden, in der das Gut nach rechts abgegeben wird und der Förderer damit im Uhrzeigerdrehsinn umläuft. In der in Fig. 9 dargestellten Stellung der einzelnen Ventile wird Druckflüssigkeit von der Hydraulikversorgung 139 durch die Leitung 179 von der Pumpe 227 und Rücklauföl zu dem Sammelbehälter 229 über die Leitung 181 gelangen. Wenn nun der Schalter 177 derart verstellt wird, daß der Stromkreis zu der Klemme 224 geschlossen wird, so wird ein Strom über die Leitung 225 und den Schalter 135 in die Leitung 223 fließen und den Magnet des magnetgesteuerten Ventiles 213 erregen. Letzteres verschiebt hierdurch das Pilotventil 197 mit Bezug auf Fig. 9 nach rechts, so daß Druckflüssigkeit über die Leitung 199 in den Zylinder 121 gelangen kann, wodurch der Zylinder 121 eingefahren wird und der Förderer 91 nach links verschoben wird. Unter diesen Bedingungen besteht ein Rückflußweg aus dem Zylinder 121 über die Leitung 201, das pilotgesteuerte Ventil 197 und die Leitung 205 zu der Leitung 181. Die nach links gerichtete Bewegung des Förderers 91 setzt sich so lange fort, bis der Schalter 135 über den Knopf 149 betätigt wird, wenn der Betätiger 139 nach links gegen die Wirkung der Feder 157 sich verschiebt. Die Betätigung durch den Knopf 149 öffnet den zu dem magnetgesteuerten Ventil 213 gehörenden Schalter und schließt den zu dem magnetgesteuerten Ventil 187 gehörenden Schalter, wodurch die Leitung 193 stromführend wird und der Magnet des magnetgesteuerten Ventils 187 erregt wird. Hierdurch wird das magnetgesteuerte Ventil 187 aus seiner Neutralstellung in eine Stellung verschoben, in der Druckflüssigkeit zu der der Feder abgelegenen Seite des Pilotventils 173 gelangen kann, wodurch dieses in eine Stellung verschoben wird, in der die Drehrichtung des Motors 130 umgekehrt wird, so daß der Motor und die Plane im Uhrzeigerdrehsinn mit Bezug auf Fig. 3 umlaufen. Ein Rücklaufweg von dem Motor 130 besteht durch die Leitung 177, das Pilotventil 173 und die Leitung 185 in die Leitung 181.

Nachdem die erste Bahn abgeschlossen wurde, betätigt die Bedienungsperson, ohne den Ernteprozeß zu unterbrechen, den Schalter 167 derart, daß der Stromkreis zur Klemme 224 unterbrochen und der Stromkreis zu der Klemme 222 geschlossen wird. Damit kann ein Strom durch die Leitung 221 und den Schalter 133 und die Leitung 219 zu dem Magnet des magnetgesteuerten Ventiles 107 fließen. Das magnetgesteuerte Ventil 207 wird dadurch das Pilotventil 197 mit Bezug auf Fig. 9 nach links verstellen, wodurch Druckflüssigkeit durch die Leitung 201 in den Zylinder 221 gelangen kann, wodurch dieser ausgefahren und der Förderer 91 nach rechts, wie es in Fig. 9 gezeigt ist, verstellt werden kann. Die Ventileinheit 163 für den Motor 130 ist dabei nicht stromführend, da der Schalter 167 von der Klemme 224 fortbewegt wurde. Hieraus folgt, daß das Pilotventil 173 über seine Feder in seine Ausgangsposition zurückverschoben wurde, in der es sich in der linken, in Fig. 9 dargestellten Position befindet. In dieser Stellung kann dann Flüssigkeit über die Leitung 177 zu dem Motor 130 gelangen und den Motor 130 und die Plane 127 entgegen dem Uhrzeigerdrehsinn antreiben. Rückflüssigkeit von dem Motor 130 kann über die Leitung 175, das Pilotventil 173 und die Leitung 185 in die Leitung 181 gelangen. Hieraus folgt, daß eine Gutabgabe nach links bereits erfolgt, bevor der Förderer 91 nach rechts verschoben wird. Das Verschieben des Förderers nach rechts dauert so lange, bis eine Betätigung des Schalters 133 durch die Betätigung durch den Knopf 143 erfolgt, wenn der Betätiger 137 nach rechts gegen die Wirkung der Feder 155 verschoben wird. Durch die Betätigung des Schalters 133 wird der Stromkreis zu dem magnetgesteuerten Ventil 207 durch den normalerweise geschlossenen Kontaktfinger 134 und die Leitung 219 unterbrochen. Dadurch wird das magnetgesteuerte Ventil 207 in seine Ausgangspositon zurückverstellt und der Pilotdruck an der einen Seite des Pilotventils kann sich zur Rücklaufleitung abbauen, wodurch das Pilotventil 197 in seine Neutralstellung zurückgeführt wird, wodurch das Ausfahren des Zylinders 121 unterbrochen ist. Rückflußflüssigkeit aus dem Zylinder 121 während des Ausfahrens kann durch die Leitung 199 das Pilotventil 197 und die Leitung 205 in die Leitung 181 gelangen.

Nachdem die zweite Bahn, wie sie in Fig. 1 dargestellt worden ist, beendet wurde, muß die Bedienungsperson die Schwadablegeeinrichtung 13 für eine zweite erste Bahn der Erntemaschine einstellen, d.h. für die Bildung eines ersten Schwads eines Doppelschwads. Um nun die Schwadablegeeirichtung 13 in ihre Stellung für die erste Bahn zurückzuführen, wird der Schalter 167 wieder derart verstellt, daß der Stromkreis zu der Klemme 222 unterbrochen und der Stromkreis zu der Klemme 224 geschlossen wird, wodurch die Ventileinheit 165 derart betätigt wird, daß der Zylinder 121 eingefahren wird. Sobald das Einfahren des Zylinders 121 begonnen hat, wird der Schalter 133 deaktiviert, d.h. der Schalter 133 wird wieder in seine geschlossene Position verbracht. Dies hat aber keine Wirkung, da der Stromkreis über die Klemme 222 nicht geschlossen ist. Wenn nun der Förderer 91 weiter nach links verschoben wird, so wird zunächst eine Gutabgabe nach links (Fig. 1) solange erfolgen, bis der Schalter 135 über den Betätiger 139 betätigt wird. Hieraus folgt, daß der Förderer 91 vollkommen nach links verschoben wird, bevor die Drehrichtung des Motors 130 umgekehrt wird. Die Umkehrung der Drehrichtung des Motors 130 erfolgt, wenn der Schalter 138 geschlossen wird, wodurch über die Leitung 139 der Magnet des magnetgesteuerten Ventils 187 betätigt wird und letzlich der Motor 130 mit dem Förderer bzw. seiner umlaufenden Plane 127 im Uhrzeigerdrehsinn angetrieben werden, um das Gut nach rechts mit Bezug auf die Figuren 1 und 5 abzugeben.

Aus vorstehender Beschreibung folgt, daß bei der Verstellung der Schwadablegeeinrichtung 13 von einer ersten Bahn zu einer zweiten Bahnstellung die Umkehrung des Motors 130 bereits erfolgt, um die Abgabe des Gutes nach links zu bewirken, bevor eine Verstellung des Förderers nach rechts durchgeführt ist. Gleichfalls wird bei der Verstellung der Schwadablegeeinrichtung 13 aus der Stellung für die zweite Bahn in die Stellung für die erste Bahn die Umkehrung der Drehrichtung des Motors 130 verzögert, bis der Förderer vollständig nach links verschoben wurde. Die sofortige Umkehrung der Förderrichtung bei der Verstellung von der ersten Bahn in die zweite Bahn und die verzögerte Umkehrung bei der Verstellung von der zweiten Bahn zurück in die erste Bahn verhindert, daß Gut auf nicht abgeerntes Gut oder den Raum zwischen dem nicht abgeernteten Gut und dem ersten Schwad, über den der Ackerschlepper während der zweiten Bahn fahren muß, geworfen wird.

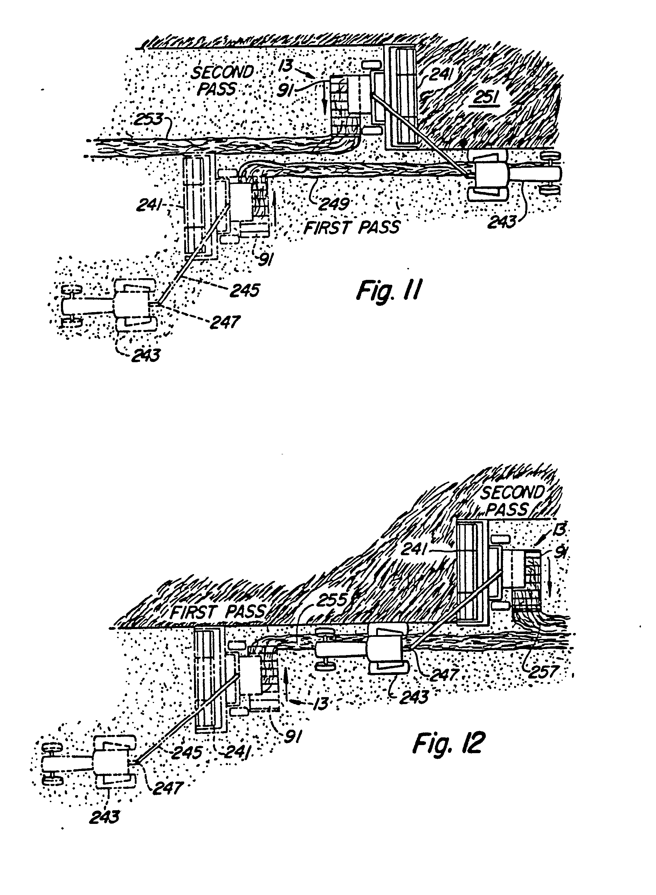

In der Fig. 11 ist ein weiteres Ausführungsbeispiel nach der Erfindung dargestellt. Die dort gezeigte Schwadablegeeinrichtung 13 kann ebenfalls mit einem Mähquetschzetter 241 oder einer Erntemaschine verwendet werden, die an beiden Seiten eines ziehenden Ackerschleppers 243 eingesetzt werden kann. Hierbei kann die Erntemaschine 241 so ausgebildet sein, wie diejenige in der US-A-4 196 917. Die Erntemaschine 241 ist mit einer bogenförmig ausgebildeten Deichsel 245 versehen, die sich von einer Stelle in der Nähe der Längsmitte des Erntemaschinenrahmens bis zu einer Schlepperkupplung 247 erstreckt. Die Deichsel 245 ist über den Rahmen der Erntemaschine schwenkbar, damit die Erntemaschine über einen in der Zeichnung nicht dargestellten Kontrollmechanismus an jeder Seite des Ackerschleppers eingesetzt werden kann. Im Einsatz stellt die Bedienungsperson die Erntemaschine derart, daß sie gegenüber dem Ackerschlepper auf einer Seite versetzt ist, auf der sich das unabgeerntete Gut noch befindet. Bei der ersten in gestrichelten Linien dargestellten Bahn wird die Schwadablegeeinrichtung 13 dann nach links in eine erste Abgabeposition zur Bildung eines Schwads 249 innerhalb der Begrenzungen der Erntemaschine 241 und rechts der Schwadablegeeinrichtung 13 verstellt. Am Ende des Feldes werden für die zweite Bahn der Ackerschlepper 243 und die Erntemaschine 241 gewendet, und die Erntemaschine 241 wird nach links außen neben den Ackerschlepper verfahren, so daß sich die Erntemaschine 241 wiederum auf der Seite neben dem Ackerschlepper befindet, auf der das nicht abgeerntete Gut 251 noch steht.

Zusätzlich wird die Schwadablegeeinrichtung 13 dann nach rechts in eine Gutabgabeposition gestellt, in der ein zweiter Schwad 253 teilweise außerhalb der Begrenzung der Erntemaschine 241 und rechts von der Schwadablegeeinrichtung 13 abgelegt wird. Die Ernte in dieser Art wird fortgesetzt durch Bildung eines ersten Schwades, dadurch daß die Erntemaschine in eine Richtung gezogen wird, und dann durch Bildung eines zweiten Schwades, der mit dem erten Schwad zu einem Doppelschwad vereinigt wird, dadurch, daß die Erntemaschine parallel zu dem ersten Schwad aber in umgekehrter Richtung über das Feld gezogen wird. Es folgt hieraus, daß diese Anordnung in soweit von der in der Fig. 1 dargestellten Anordnung abweicht, daß die Schwaden für die zweite Bahn in unterschiedlichen Verfahren gelegt werden. Bei dem in Fig. 1 angedeuteten Verfahren wird der Förderer 91 nach rechts verstellt und gibt das Gut links des Förderers 91 ab. In dem zweiten in Fig. 11 dargestellten Verfahren wird der Förderer nach rechts verstellt und gibt das Gut rechts des Förderers ab. Solch eine Variation in der Betätigung der Schwadablegeeinrichtung 13 bedeutet eine Modifizierung des elektrohydraulischen Kreislaufes 132, der in Fig. 9 dargestellt ist.

In Fig. 12 ist ein weiteres Verfahren für die Arbeitsweise der Erntemaschine 241 und der Schwadablegeeinrichtung 13 dargestellt. In der in Fig. 12 wiedergegebenen Arbeitsweise werden die Erntemaschine 241 und die Schwadablegeeinrichtung 13 rund um das Feld in der gleichen Richtung, wie die erste und die zweite Bahn gezogen. Für die erste Bahn wird der Förderer 91 der Schwadablegeeinrichtung 13 nach rechts in eine Gutabgabeposition zur Bildung eines ersten Schwades 255 innerhalb der Begrenzungen der Erntemaschine verschoben. Der Förderer 91 wird dann im Uhrzeigerdrehsinn oder zur rechten Seite der Erntemaschine 241 angetrieben. Für die zweite Bahn wird der Förderer 91 der Schwadablegeeinrichtung dann nach links in eine Gutabgabeposition zur Bildung eines Schwads 257 entlang der linken Seite der Erntemaschine 241 verschoben. Der Förderer 91 wird dann entgegen dem Uhrzeigerdrehsinn oder zur linken Seite der Erntemaschine 241 hin angetrieben. Es wird darauf hingewiesen, daß bei der ersten Bahn der Förderer 91 nach rechts verschoben wurde und das Gut zur rechten Seite der Erntemaschine 241 fördert. In der zweiten Bahn ist der Förderer 51 nach links verschoben und fördert das Gut zur linken Seite des Förderers 241. Auch solch eine Änderung erfordert eine nicht dargestellte Modifizierung des elektrohydraulischen Steuerkreises 132 nach Fig. 9.

## Patentansprüche

1. Verbindung der Abgabeöffnung einer sich auf Rädern (39, 41) abstützenden, aus einer Arbeitsstellung in eine höher gelegene Transportstellung verstellbaren Erntemaschine (11) mit einer Ablegeeinrichtung (13), dadurch gekennzeichnet, daß die Ablegeeinrichtung (13) an ihrer Frontseite Anschlußelemente (69, 71) aufweist, die beim Verstellen der Erntemaschine (11) aus der Arbeitsstellung in die Transportstellung von an der Erntemaschine vorgesehenen Anschlußelementen (65, 67) erfaßt werden und um die die Ablegeeinrichtung (13) nach dem Abheben von der Aufstellfläche auf die Erntemaschine zu verschwenkt, wobei die Anschlußelemente (65, 67 und 69, 71) an Erntemaschine (11) und Ablegeeinrichtung (13) derart ausgebildet sind, daß die Ablegeeinrichtung (13) im eigebauten Zustand frei nach oben um die Anschlußelemente (65, 67, 69, 71) schwenkbar ist.

2. Verbindung nach Anspruch 1, dadurch gekennzeichnet, daß die Ablegeeinrichtung (13) im abgebauten Zustand sich auf Standbeinen (73, 75) abstützt, die in der Transportstellung der Erntemaschine (11) derart verstellbar sind, daß sie in der Arbeitsstellung keine Bodenberührung haben.

3. Verbindung nach Anspruch 2, dadurch gekennzeichnet, daß die Standbeine (73, 75) unter die Ablegeeinrichtung (13) klappbar sind.

4. Verbindung nach einem oder mehreren der vorherigen Ansprüche, dadurch gekennzeichnet, daß die an der Erntemaschine (11) vorgesehenen Anschlußelemente (65, 67) als nach oben offene Haken ausgebildet sind, an die sich bodenwärts erstreckende Streben (79, 81) anschließen, gegen die die Ablegeeinrichtung (13) frontseitig zur Anlage kommt.

## Claims

1. Connection between the outlet opening of a harvesting machine (11) and a distributing arrangement (13), the machine being supported on wheels (39, 41) and being adjustable from a working position to a higher transport position, characterized in that the distributing arrangement (13) has connecting elements (69, 71) at its front side which are engaged by connecting elements (65, 67) provided on the harvesting machine on adjustment of the harvesting machine (11) out of the working position into the transport position and about which the distributing arrangement (13) swings towards the harvesting machine after the raising from the standing surface, the connecting elements (65, 67 and 69, 71) on the harvesting machine (11) and the distributing arrangement (13) being so formed that the distributing arrangement (13) can swing freely upwardly about the connecting elements (65, 67, 69, 71) in the installed state.

2. Connection according to claim 1, characterized in that the distributing arrangement (13) is supported when dismounted on standing legs (73, 75) which are so adjustable in the transport position of the harvesting machine (11) that they make no contact with the ground in the working position.

3. Connection according to claim 2, characterized in that the standing legs (73, 75) can be swung up under the distributing arrangement (13).

4. Connection according to one or more of the preceding claims, characterized in that the connecting elements (65, 67) provided on the harvesting machine (11) are formed as upwardly open hooks adjoining struts (79, 81) extending towards the ground, against which struts the distributing arrangement (13) comes into frontal abutment.

## Revendications

1. Connexion entre l'ouverture de dégagement d'une moissonneuse (11) s'appuyant sur des roues (39, 41), et pourvue d'une javeleuse (13) que l'on peut faire passer d'une position de travail à une position de transport placée plus haut, caractérisée en ce que la javeleuse (13) comporte à l'avant des éléments de raccordement (69, 71) qui, lorsque la moissonneuse (11) passe de la position de travail à la position de transport, sont interceptés par des éléments de raccordement (65, 67) prévus sur la moissonneuse et autour desquels la javeleuse (13) pivote vers la moissonneuse après l'écartement de la surface d'appui, les éléments de raccordement (65, 67 et 69, 71) se trouvant sur la moissonneuse (11) et la javeleuse (13) étant conformés de façon qu'à l'état monté, la javeleuse (13) puisse pivoter librement vers le haut autour des éléments de raccordement (65, 67, 69, 71).

2. Connexion suivant la revendication 1, caractérisée en ce que la javeleuse (13) s'appuie, à l'état démonté, sur des pieds d'appui (73, 75) qui peuvent être déplacés, dans la position de transport de la moissonneuse (11), de façon a n'avoir aucun contact avec le sol dans la position de travail.

3. Connexion suivant la revendication 2, caractérisée en ce que les pieds d'appui (73, 75) peuvent être rabattus au-dessous de la javeleuse (13).

4. Connexion suivant une ou plusieurs des revendications précédentes, caractérisée en ce que les éléments de raccordement (65, 67) prévus sur la moissonneuse (11) sont réalisés sous la forme de crochets ouverts vers le haut auxquels se raccordent des entretoises (79, 81) s'étendant vers le sol, avec lesquelles la javeleuse (13) entre frontalement en contact.

Fig. I

FIRST PASS

SECOND PASS

Fig. 2a

Fig. 2b

Fig. 3

0 165 602

Fig. 4

*Fig. 5*

0 165 602

Fig. 6

Fig. 7

Fig. 8

Fig. 9

0 165 602

Fig. 10

Fig. 11

Fig. 12